# EUROPEAN PATENT SPECIFICATION

(11) **EP 4 256 955 B1**
(45) Date of publication and mention of the grant of the patent: **09.09.2026**
(21) Application number: 23163444.5
(22) Date of filing: 22.03.2023
(51) Int. Cl.: A01K 13/00, A01L 5/00, A01L 9/00

(54) **SHOE FOR CLOVEN-HOOFED ANIMAL HOOF**
SCHUH FÜR EINEN HUF EINES PAARHUFERS
CHAUSSURE POUR UN SABOT D'UN ANIMAL À SABOTS FENDUS

(30) Priority: 06.04.2022 IT 202200006872
(43) Date of publication of application: 11.10.2023
(73) Proprietor: IDEA PLAST S.r.l. a Socio Unico, 20045 Lainate (IT)
(72) Inventor: TRENTINI, Alessandro, LAINATE (IT)
(74) Representative: Lunati & Mazzoni S.r.L.

(56) References cited:
- WO-A2-2008/132730
- DE-B- 1 000 178
- DE-C- 374 804
- US-A- 5 875 853
- US-A- 6 056 062

## Description

It is an object of the present invention to provide a shoe for cloven-hoofed animal hoof of the type specified in the preamble to the first claim.

In particular, the present invention has as its object a shoe that can be worn by a cloven-hoofed animal, such as a bovine, deer, pig, antelope, gazelle, goat or sheep, for the treatment and/or prevention of lameness.

Similar shoes are described in patent documents DE-B-1000178, US-A-5875853, DE-C-374804 and US-A-6056062.

As is well known, among the pathologies that can afflict cloven-hoofed animals, particularly cattle, is lameness.

Bovine lameness refers to the manifestation of a defect in the locomotor apparatus, with altered gait of the animal resulting from a very painful stimulus that affects mostly, but not only, the animal's hind feet, specifically involving the external hoof claw.

The effects of lameness manifest themselves as intense pain in one of the affected limbs.

The lame animal also reduces their food and water intake, thus modifying their eating behaviour, with more meals, and the length of rest periods, with fewer hours of overall rest.

With the aforementioned knowledge, awareness of the importance of proper functioning of the locomotor system for animal health and welfare has increased worldwide.

Many countries have recently introduced electronic systems for routinely recording foot and hoof claws problems in dairy cows, and many more countries are extending plans to start collecting information in the near future.

In addition, many devices have been extended to intervene in the manifestation of lameness.

An example of such devices is described in patent application WO-A-2008132730. That application essentially describes a device that can be worn by a bovine animal having a sole for holding the bovine leg elevated and a support structure connected to the sole and capable of locking the device onto the animal's leg in a stable manner.

The known technique described includes some important drawbacks.

In particular, the device described in WO-A-2008132730 allows only to obtain preventive effects to lameness, but has no effectiveness in case lameness is in progress and it is therefore necessary to treat it.

Moreover, substantially, such a device is nothing more than a simple cover, or shoe, that can be applied to bovine hooves.

In this situation, the technical task underlying the present invention is to devise a shoe for bovine hoof capable of substantially obviating at least part of the aforementioned drawbacks.

In the context of said technical task, it is an object of the invention to obtain a shoe for cloven-hoofed animal hoof capable of treating animal lameness.

Another object of the invention is to obtain a shoe for cloven-hoofed animal hoof which, in return for the aforementioned advantages, defines a simple, economical and environmentally sustainable structure.

In conclusion, a further task of the invention is to realise a shoe for cloven-hoofed animal hoof which can be easily fitted on animal hooves.

The specified technical task and purposes are achieved by a shoe for a cloven-hoofed animal hoof as claimed in the appended claim 1.

Preferred technical solutions are disclosed in the dependent claims.

The features and advantages of the invention are hereinafter clarified by the detailed description of preferred embodiments of the invention, with reference to the appended drawings, in which:
the **Fig. 1** illustrates a view from below of a shoe for a cloven-hoofed animal hoof according to the invention configured to be worn on a bovine hoof whose left claw is affected by the pathology;
the **Fig. 2** illustrates a top view of the shoe of Fig. 2;
the **Fig. 3** is a side view of the shoe of Figs. 1-2;
the **Fig. 4** represents a posterior view of the shoe of Figs. 1-3;
the **Fig. 5** illustrates a side view in cross-section of the shoe of Figs. 1-4;

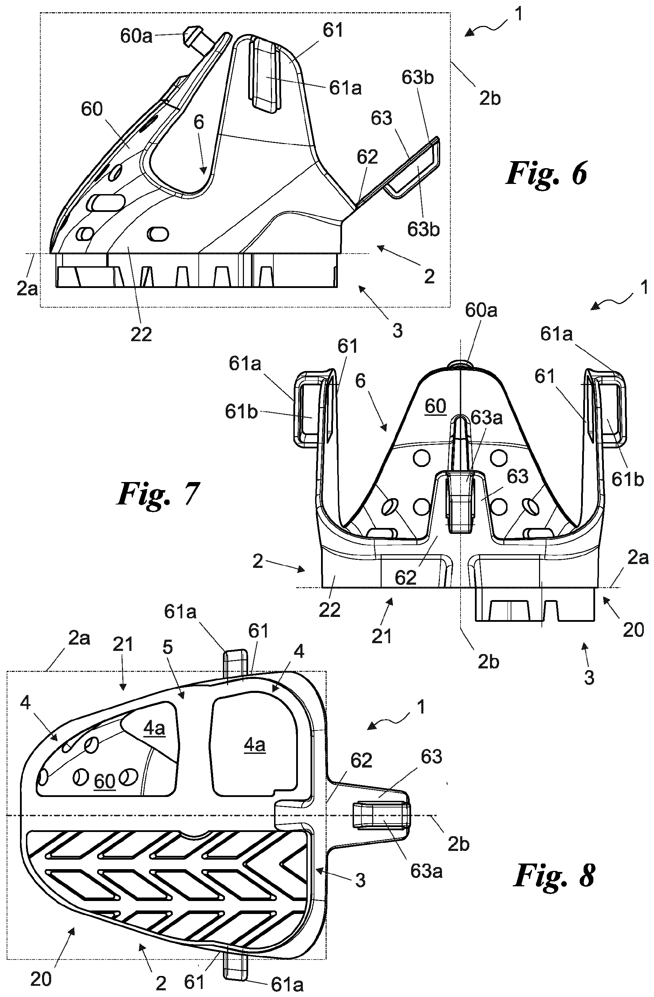

the **Fig. 6** illustrates a side view of a further embodiment of a shoe for cloven-hoofed animal hoof according to the invention configured to be fitted on a bovine hoof whose left hoof claw is affected by the pathology and comprising the addition of a posterior tongue relative to the shoe of Figs. 1-5;
the **Fig. 7** is a posterior view of the shoe of Fig. 6;
the **Fig. 8** is a bottom view of the shoe of Figs. 6-7;

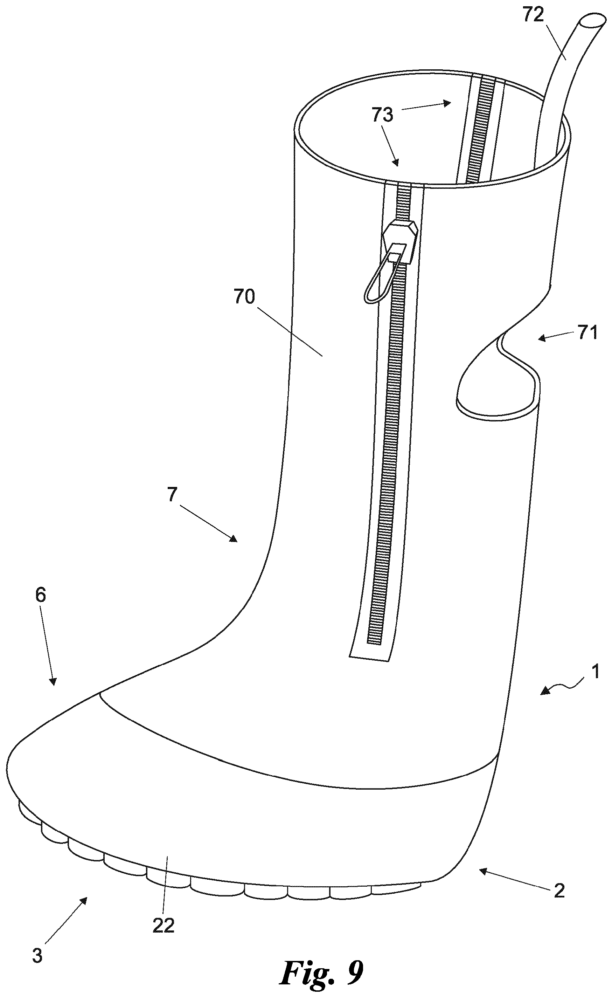

the **Fig. 9** illustrates a perspective view of a shoe for a cloven-hoofed animal hoof according to the invention in which a sleeve is present separated from a membrane; and
the **Fig. 10** illustrates a perspective view of a shoe for a cloven-hoofed animal hoof according to the invention in which the sleeve is present in one piece with the membrane.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

With reference to the Figures, the shoe for cloven-hoofed animal hoof according to the invention is globally indicated by the number **1.**

The shoe 1 is suitable for being shod on by any cloven-hoofed animal. Therefore, it can be shod on a hoof. Moreover, preferably, the shoe is particularly suited to be shod by a bovine, but it could equally be shod by sheep, pigs, or other cloven-hoofed animals.

As is known, the cloven-hoofed animal hoof comprises a pair of reciprocally side-by-side claws which allow the animal to rest stably on a ground. The hoof is also divided into a plurality of different zones.

For example, the front part of the hoof is called the toe, while the rear part is called the heel. In addition, the lateral bulkheads of the hooves are usually referred to as the wall, while the area where the hooves end and the pelage of the paw begins is usually called the crown.

In conclusion, the part of the hoof immediately above the heel and immediately below the high hind claws is called the fetlock.

In particular, shoe 1 is capable of protecting at least part of the hoof claws.

In this regard, shoe 1 comprises at least sole **2**.

The sole 2 is the portion of the shoe 1 capable of being positioned immediately below the hoof claws.

Thus, the sole runs along a main plane **2a.** The main plane 2a is essentially a virtual plane along which the sole 2 extends. Thus, it is apt to be positioned typically parallel to the ground.

The sole 2 additionally defines a sagittal plane **2b.**

The sagittal plane 2b is transverse to the main plane 2a. In addition, preferably, the sagittal plane 2b is apt to be oriented parallel to the forward direction of the animal. Thus, the sole 2 is configured to be positioned between the ground and the claws of the hooves, when the shoe 1 is in use, such that the sagittal plane 2b is lying between the hooves.

The sagittal plane 2b, therefore, separates the sole 2 substantially into two portions.

The sagittal plane 2b divides the sole 2 into at least a first portion **20** and a second portion **21.**

The portions 20, 21 are, of course, parts of the same sole 2. They are, moreover, preferably in one piece and virtually separated by the sagittal plane 2b.

The latter, moreover, may be any plane, or exactly a plane of symmetry of the shoe 1 and, therefore, also the plane of symmetry of the same sole 2.

In this case, therefore, the portions 20, 21 may be mutually mirror-like with respect to the sagittal plane 2b.

Furthermore, the sole 2 defines edges **22.** The edges 22 are defined in correspondence with the main plane 2a. In particular, the edges 22 substantially envelop the portions 20, 21. Therefore, the edges 22 substantially define the boundaries along the main plane 2a of the sole 2 and substantially determine, again in the main plane 2a, the overall contour thereof.

However, the first portion 20 comprises a heel 3.

The heel 3 is substantially an element defining a thickness. Thus, the heel 3 is an element which, when the shoe 1 is in use on a hoof, allows the hoof itself to be elevated above the ground.

In detail, heel 3 protrudes from the main plane 2a transversely to the main plane 2a itself. For example, it could protrude, and thus define the thickness, perpendicularly to the main plane 2a.

In particular, heel 3 is configured to allow the support of only one claw. Thus, when shoe 1 is fitted on the hoof, only one of the hooves rests on heel 3.

The latter preferably runs along the entirety of the first portion 20.

Furthermore, it can define a minimum thickness, transversely to the main plane 2a, of about 5 mm.

Advantageously, the second portion 21 instead comprises at least one housing **4.**

The housing 4 is essentially a component that allows the insertion, i.e. the containment of at least part of one claw. Thus, the housing 4 is precisely configured to accommodate at least part of a single claw. In this way, the housing 4 allows the claw to protrude from the main plane 2a without encountering obstacles. In other words, therefore, housing 4 allows the claws to remain suspended. The term suspended means that the hoof is in contact neither with the ground nor with any other supporting surface, but remains free. The support of the hoof is thus exclusively delegated to the first portion on a single hoof. In a preferred, but not exclusive embodiment, the second portion 21 may comprise more than one housing 4.

For example, the second portion 21 may comprise two housings 4. The latter may then be arranged at the tip of the claw and the heel of the claw, respectively.

Thus, the housings 4 may be mutually separated by a strip **5.**

The strip 5 is essentially a thin portion of the sole 2. The strip 5 preferably extends transversely to the sagittal plane 2b, possibly right normally to it.

In addition, the strip 5 preferably also extends over the main plane 2a.

In addition, the housing 4, or each housing 4, may be realised according to different construction methods. For example, the housing 4 may comprise, or be formed by, a hole **4a.**

The hole 4a is preferably a through hole. Thus, it is realised on the sole 2 preferably at the main plane 2a.

Alternatively, the housing 4 could be made from a cavity. For example, the second portion 21 could also comprise a heel, but the latter would preferably be hollow to avoid contact between the inner surfaces and the claw.

The sole 2 could be constrained to the hoof by means of constraining means of a different type, possibly also bonded to the hoof at the main plane 2a and, thus, the shoe 1 could essentially comprise only the sole 2.

In a preferred embodiment, the shoe 1 also comprises a membrane **6.**

The membrane 6 is essentially a flat or curved portion of shoe 1 defining a reduced thickness. It may be elastically deformable or rigid.

Furthermore, in general, the membrane 6 extends from the edges 22 transverse to the main plane 2a on a side of the sole 2 opposite the heel 3.

Thus, the membrane 6 is configured to stably wrap around the hooves when the shoe 1 is in use on the hoof.

In detail, the membrane 6 may include certain arrangements.

For example, the membrane 6 may include a central tongue **60.** If present, the central tongue 60 is substantially a flap of membrane 6 disposed at the sagittal plane 2b. Furthermore, the central tongue 60 is transverse to the sagittal plane 2b. Therefore, preferably, the central tongue 60 is configured to be disposed between the claws when the shoe 1 is in use.

Even more in detail, the central tongue 60 is configured to extend up to the crown of the hoof.

The membrane 6 may also comprise lateral tongues 61. In particular, the lateral tongues 61 are preferably two in number. Thus, the lateral tongues 61 are preferably arranged mirror-like with respect to the sagittal plane 2b. Furthermore, the lateral tongues 61 are configured to be placed in contact with the lateral wall of the hoof. The lateral tongues 61 are also configured to extend, when the shoe 1 is in use, up to the crown of the hoof.

The membrane 6 may also comprise a wall **62.** If present, the wall 62 is arranged posteriorly, i.e. on a side of the sole 2 opposite the central tongue 60.

In addition, the wall 62 runs between the side tongues 61 and is configured to wrap around the rear of the hoof below the fetter.

As an alternative to the wall 62, or in addition, the membrane 6 may comprise a posterior tongue **63.**

If present, the posterior tongue 63 is arranged posteriorly, i.e. on a side of the sole 2 opposite the central tongue 60. Furthermore, extends between the lateral tongues 61 and may have similar characteristics to the lateral tongues 61. Therefore, the posterior tongue 63 is configured to be placed in contact with the lateral wall of the hoof. The posterior tongue 63 is also configured to extend, when the shoe 1 is in use, up to the crown of the hoof, possibly also up to the fetlock.

The membrane 6 may also comprise additional features.

For example, the central tongue 60 may comprise a pin **60a.**

The pin 60a may be a feature protruding transversely from the central tongue 60 outwards from the membrane 6. Thus, each of the lateral tongues 61 may comprise a hook **61a**.

The hook 61a may substantially be defined by a tongue extending parallel to a respective lateral tongue 61 or by a ring. Further preferably, each hook 61a defines a slot **61b**.

The slot 61b is substantially a slot, possibly a loop, determined by the hook 61a and interposed between the hook 61a and the lateral tongue 61.

The shoe 1 may thus comprise a connecting element between the tongue ends 60, 61. For example, the shoe 1 may comprise a lace. The latter may wrap around, when the shoe 1 is in use, the hoof at the crown.

Additionally, the lace passes through the slots 61b. In addition, the lace preferably includes slots at its own ends configured to be pierced by the pin 60a. In this way, the lace can be secured and tightened around the hoof of the of the animal, preferably but not necessarily bovine.

Of course, if membrane 6 also comprises a rear tongue 63, the latter may comprise a further hook **63a.** The further hook 63a may substantially also be defined by a tongue extending parallel to a respective lateral tongue 61 or by a ring. Further preferably, the further hook 63a defines a further slot **63b.**

The further slot 63b is substantially an aperture, possibly a loop, determined by the further hook 63a and interposed between the further hook 63a and posterior tongue 63. Thus, the lace can pass through all slots 61b, 63b to make the grip of the shoe 1 around the hoof of the cloven-hoofed animal more stable.

The shoe 1 may be further configured to stably wrap not only the hooves, when the shoe 1 is in use on the hoof, but also part of the paw, possibly up to or including the hind claws.

In this regard, for example, shoe 1 may further include a sleeve **7.**

If present, the sleeve 7 is substantially an element configured to cover, in detail e.g. wrap around, at least part of the animal's paw.

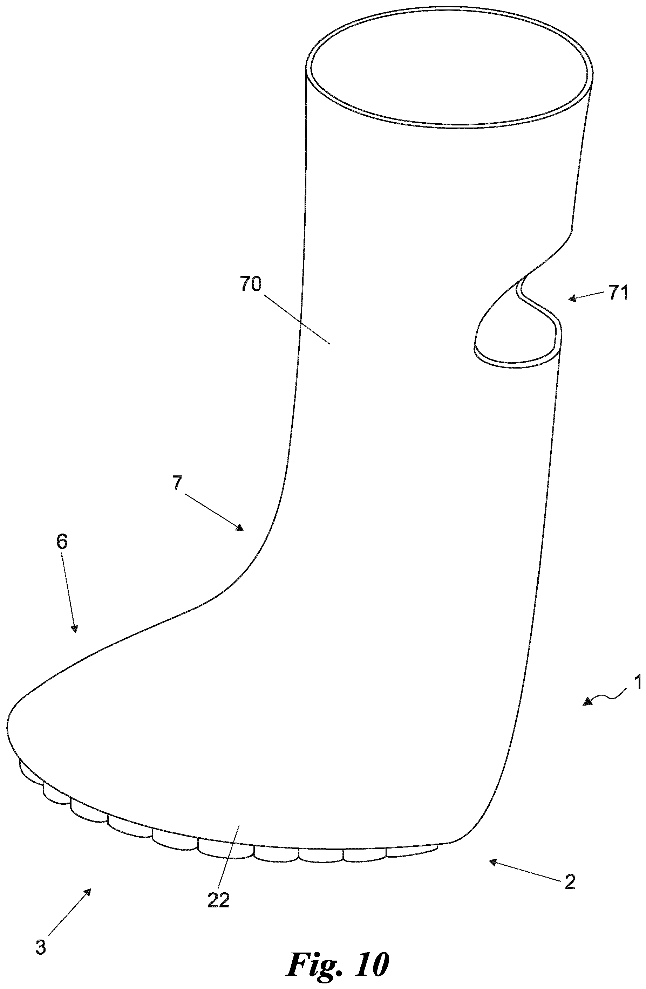

Furthermore, the sleeve 7 may be lying on the membrane 6 and be separate with respect thereto. Or, the sleeve 7 may be bound to the membrane 6 or even in one piece with the membrane 6, as shown in Fig. 10.

In general, the sleeve 7 is integral with the membrane 6.

In any case, preferably, the sleeve 7 comprises a tubular casing **70.**

The casing 70 is essentially a closed element wrapped around a development axis. It may take the form of a conduit, at least partially dilatable, within which the animal's leg may be threaded.

For example, the casing 70 may include, or be made of, polymeric material. In particular, the material may be rubber, for example TPU, or even elastic non-woven fabric.

Furthermore, preferably, the sleeve 7 comprises at least one slit **71.**

The slit 71 is substantially defined by a through-hole. It is then positioned on the casing 70 so as to be arranged, when the shoe 1 is in use, at the hind claws of the animal to allow the hind claws to protrude out of the sleeve 7.

In addition, the sleeve 7 may include a cannula **72.** If present, the cannula 72 is preferably inserted within the sleeve 7 such that it is positioned between the sleeve 70 and the animal's leg.

Thus, the cannula 72 may terminate at the sole 2 so as to allow, when the shoe 1 is in use, nutrients or therapeutic substances to flow to the hoof from outside the sleeve 7.

The sleeve 7 may also comprise closing means **73.**

The closure means 73 are preferably arranged on the sleeve 70. Furthermore, they are configured to allow opening and closing, on command, of at least part of the casing. For example, the closing means 73 may comprise one or more zips developed parallel to the development axis of the casing 70.

In this way, the sleeve 7 may be, when open, temporarily dilated to facilitate the insertion or extraction of a leg. Subsequently, it can be closed again to wrap around the paw in a more stable manner, adhering to it.

The invention includes a new use.

In particular, the invention comprises the use of the shoe 1 for the treatment of cloven-hoofed animal lameness. In this sense, the invention also encompasses a new shoeing process of the shoe 1 on a hoof of a cloven-hoofed animal including a diseased claw. In detail, when the shoe 1 is in use for the treatment of lameness, or is shod on a hoof including a diseased claw, the second portion 21 is fitted at the diseased hoof claw.

This means that, for example, in a typical lameness situation involving the outer hoof of a cloven-hoofed animal leg, the second portion 21 of the sole 2 is facing outwards.

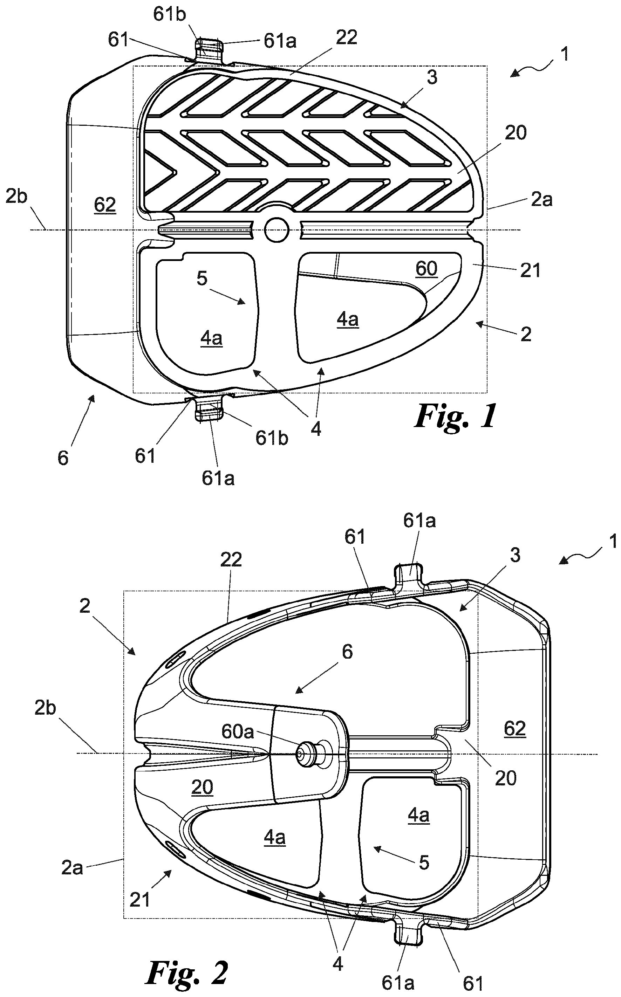

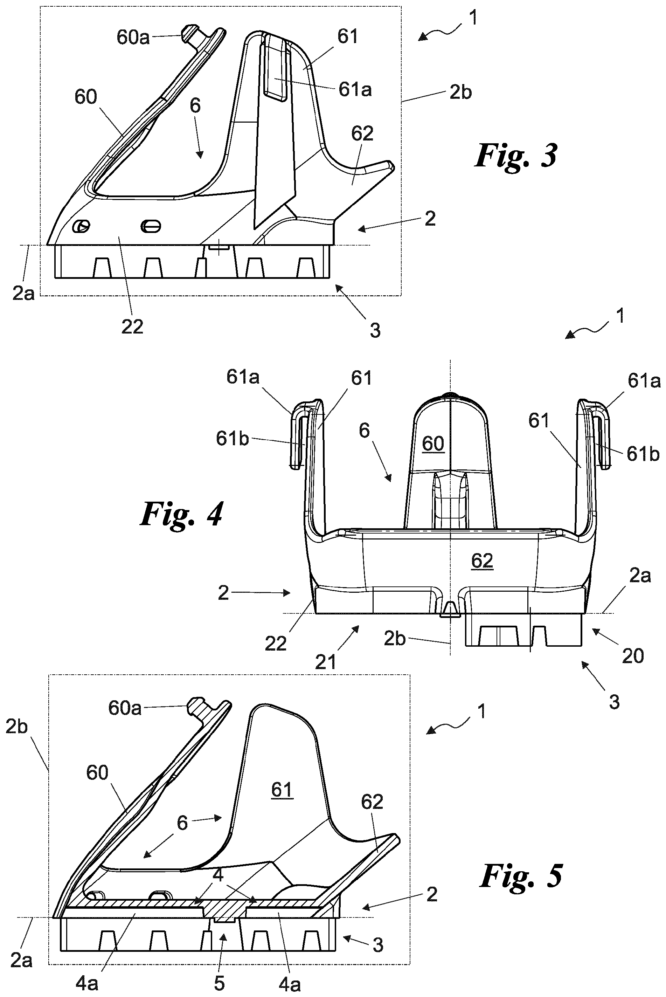

In detail, for example, if in the front or hind leg of the cloven-hoofed animal affected by lameness the claw affected by the pathology is the left, the shoe 1 may comprise a second portion 21 arranged to the left, as in the example of Figs. 1-5.

Conversely, if in the right fore or hind leg of the cloven-hoofed animal affected by lameness the claw affected by the pathology is the right, the shoe 1 may comprise a second portion 21 arranged on the right. Therefore, first and second portions 20, 21 of the sole 2 may be inverted in order to effectively treat lameness of left or right claw.

The shoe 1 according to the invention achieves important advantages.

Indeed, the shoe for cloven-hoofed animal hoof 1 can effectively treat animal lameness. In addition, the shoe 1 can also be effectively used to prevent lameness while maintaining a high state of comfort for the animal.

Furthermore, the shoe for a cloven-hoofed animal hoof 1 defines a simple and economical structure. Thus, for example, shoe 1 can be made entirely in one piece from polymeric material.

For example, recycled plastic can be used for this purpose.

Thus, Shoe 1 makes it possible to define an important means of care for cloven-hoofed animals made from recycled material and, consequently, considering that Shoe 1 can be both reused and in turn recycled, Shoe 1 also appears to have a high degree of eco-sustainability.

In conclusion, a further object of the invention is to realise a shoe for a cloven-hoofed animal hoof that can be easily fitted on animal hooves

The invention is susceptible to variations within the scope of the invention as defined by the claims.

For example, at least part of the inner surfaces of sole 2 and/or membrane 6 intended to contact the animal's hoof could include knurls or other protuberances configured to increase surface roughness and increase grip between the hoof and, in general, the shoe 1 so as to reduce the possibility of any unwanted slipping of the shoe.

Within this scope, the materials shapes and dimensions can be any.

## Claims

1. Shoe (1) for a cloven-hoofed animal hoof,
- said cloven-hoofed animal hoof including a pair of reciprocally side by side claws,
- said shoe (1) comprising a sole (2) expanding mainly along a main plane (2a), defining a sagittal plane (2b) transversal to said main plane (2a) and subdividing said sole (2) into a first portion (20) and a second portion (21), and configured to be positioned between the ground and said claws of said hoof in such a way that said sagittal plane (2b) lies between said claws,
- said first portion (20) including a heel (3) protruding from said main plane (2a) transversally to said main plane (2a),
and said shoe (1) being **characterised in that**
- said first portion (20) is configured to allow the support of only one said claw, and
- said second portion (21) includes at least one housing (4) configured to accommodate at least part of said one claw in such a way that said claw can protrude from said main plane (2a) unobstructed so as to remain suspended.

2. Shoe (1) according to claim 1, wherein said second portion (21) comprises two said housings (4) respectively arranged in correspondence with the tip of said claw and the heel of said claw and mutually separated by a strip (5) extending transversely to said sagittal plane (2b).

3. Shoe (1) according to any one of the preceding claims, wherein said housing (4) comprises at least one hole (4a) through said sole (2) in correspondence with said main plane (2a).

4. Shoe (1) according to any one of the preceding claims, wherein said heel (3) extends along the entirety of said first portion (20) and defines a minimum thickness, transversely to said main plane (2a), of 5 mm.

5. Shoe (1) according to any one of the preceding claims, wherein said portions (20, 21) are mutually specular with respect to said sagittal plane (2b).

6. Shoe (1) according to any one of the preceding claims, wherein said sole (2) defines, in correspondence with said main plane (2a), edges (22) wrapping said portions (20, 21) and said shoe (1) comprises a membrane (6) extending from said edges (22) transversely to said main plane (2a) on a side of said sole (2) opposite to said heel (3) and configured to stably wrap said claws when said shoe (1) is in use on said hoof.

7. Shoe (1) according to claim 6, wherein said membrane (6) comprises a central tongue (60) disposed in correspondence with said sagittal plane (2b), transversal to said sagittal plane (2b) and configured to be disposed between said claws expanding up to the crown of said hoof, and a pair of lateral tongues (61) disposed mirror-like with respect to said sagittal plane (2b) and configured to be placed in contact with the lateral wall of said hoof expanding up to the crown of said hoof.

8. Shoe (1) according to claim 7, wherein said central tongue (60) comprises a pin (60a), each said lateral tongue (61) comprises a hook (61a) defining a slot (61b) and said shoe (1) further comprises a lace wrapping said hoof in correspondence with the crown of said hoof, passing through said slots (61b) and including slots in correspondence with its ends configured to be pierced by said pin (60a).

9. Shoe (1) according to any one of claims 6-8, wherein said membrane (6) further comprises a rear wall (62) extending between said side tongues (61) and configured to wrap around the rear part of said hoof below the hoof fetlock and/or a rear tongue (63) extending between said side tongues (61), configured to extend, when said shoe (1) is in use, at least up to the crown of said hoof, and comprising a further hook (63a) defining a further slot (63b) for housing said lace.

10. Shoe (1) according to any one of the preceding claims, further comprising a sleeve (7) integral with said membrane (6) and comprising a tubular casing (70) wrapped around a development axis so as to enable said sleeve (7) to wrap around at least part of a leg of said animal.

11. Shoe (1) according to the preceding claim, wherein said sleeve (7) comprises a slit (71) positioned on said casing (70) so as to be arranged, when said shoe (1) is in use, at the hind claws of said animal to allow said hind claws to protrude outside said sleeve (7).

12. Shoe (1) according to any one of claims 10-11, wherein said sleeve (7) comprises a cannula (72) inserted inside said sleeve (7) so as to be positioned between said casing (70) and said hoof, when said shoe (1) is in use, and terminating at said sole (2) so as to allow nutrient or therapeutic substances to flow to said hoof from outside of said sleeve (7).

13. Shoe (1) according to any one of claims 10-12, wherein said sleeve (7) comprises closing means (73) configured to allow opening and closing, on command, of at least part of said sleeve (7) so that said sleeve (7) can be, when open, temporarily dilated to facilitate insertion or extraction of said hoof.

14. Shoe (1) according to claim 13, wherein said closing means (73) comprise one or more zips developed parallel to said axis of development of said casing (70).

15. Shoeing process of a shoe (1) according to any preceding claim on a hoof of a cloven-hoofed animal having a diseased claw **characterised by** the fact that said second portion (21) is shod in correspondence with said diseased claw.

## Patentansprüche

1. Schuh (1) für einen Huf eines Klauentiers,
- wobei der Huf des Klauentiers ein Paar nebeneinander angeordneter Klauen umfasst,
- wobei der Schuh (1) eine Sohle (2) umfasst, die sich hauptsächlich entlang einer Hauptebene (2a) erstreckt, eine quer zur Hauptebene (2a) verlaufende Sagittalebene (2b) definiert, welche die Sohle (2) in einen ersten Abschnitt (20) und einen zweiten Abschnitt (21) unterteilt, und dazu ausgebildet ist, zwischen dem Boden und den Klauen des Hufs derart angeordnet zu werden, dass die Sagittalebene (2b) zwischen den Klauen liegt,
- wobei der erste Abschnitt (20) einen Absatz (3) umfasst, der quer zur Hauptebene (2a) von der Hauptebene (2a) vorsteht,
und wobei der Schuh (1) **dadurch gekennzeichnet ist, dass**
- der erste Abschnitt (20) dazu ausgebildet ist, das Abstützen nur einer der Klauen zu ermöglichen, und
- der zweite Abschnitt (21) mindestens eine Aufnahme (4) umfasst, die dazu ausgebildet ist, mindestens einen Teil der einen Klaue derart aufzunehmen, dass die Klaue ungehindert von der Hauptebene (2a) vorstehen kann, um frei schwebend zu bleiben.

2. Schuh (1) nach Anspruch 1, wobei der zweite Abschnitt (21) zwei Aufnahmen (4) umfasst, die jeweils im Bereich der Spitze der Klaue bzw. des Ballens der Klaue angeordnet und durch einen sich quer zur Sagittalebene (2b) erstreckenden Steg (5) voneinander getrennt sind.

3. Schuh (1) nach einem der vorhergehenden Ansprüche, wobei die Aufnahme (4) mindestens ein Loch (4a) umfasst, das die Sohle (2) im Bereich der Hauptebene (2a) durchsetzt.

4. Schuh (1) nach einem der vorhergehenden Ansprüche, wobei sich der Absatz (3) über die gesamte Erstreckung des ersten Abschnitts (20) erstreckt und quer zur Hauptebene (2a) eine Mindestdicke von 5 mm definiert.

5. Schuh (1) nach einem der vorhergehenden Ansprüche, wobei die Abschnitte (20, 21) bezüglich der Sagittalebene (2b) zueinander spiegelsymmetrisch sind.

6. Schuh (1) nach einem der vorhergehenden Ansprüche, wobei die Sohle (2) im Bereich der Hauptebene (2a) Ränder (22) definiert, welche die Abschnitte (20, 21) umschließen, und wobei der Schuh (1) eine Membran (6) umfasst, die sich von den Rändern (22) quer zur Hauptebene (2a) auf einer dem Absatz (3) gegenüberliegenden Seite der Sohle (2) erstreckt und dazu ausgebildet ist, die Klauen stabil zu umschließen, wenn der Schuh (1) auf dem Huf verwendet wird.

7. Schuh (1) nach Anspruch 6, wobei die Membran (6) eine mittlere Zunge (60) umfasst, die im Bereich der Sagittalebene (2b) angeordnet ist, quer zur Sagittalebene (2b) verläuft und dazu ausgebildet ist, zwischen den Klauen angeordnet zu werden und sich bis zum Kronrand des Hufs zu erstrecken, sowie ein Paar seitlicher Zungen (61), die bezüglich der Sagittalebene (2b) spiegelsymmetrisch angeordnet sind und dazu ausgebildet sind, an der Seitenwand des Hufs anzuliegen und sich bis zum Kronrand des Hufs zu erstrecken.

8. Schuh (1) nach Anspruch 7, wobei die mittlere Zunge (60) einen Stift (60a) umfasst, jede seitliche Zunge (61) einen Haken (61a) umfasst, der einen Schlitz (61b) definiert, und wobei der Schuh (1) ferner ein Schnürband umfasst, das den Huf im Bereich des Kronrands umschließt, durch die Schlitze (61b) geführt ist und im Bereich seiner Enden Schlitze aufweist, die dazu ausgebildet sind, von dem Stift (60a) durchsetzt zu werden.

9. Schuh (1) nach einem der Ansprüche 6 bis 8, wobei die Membran (6) ferner eine Rückwand (62) umfasst, die sich zwischen den seitlichen Zungen (61) erstreckt und dazu ausgebildet ist, den hinteren Bereich des Hufs unterhalb des Fesselgelenks zu umschließen, und/oder eine hintere Zunge (63), die sich zwischen den seitlichen Zungen (61) erstreckt und dazu ausgebildet ist, sich bei Verwendung des Schuhs (1) mindestens bis zum Kronrand des Hufs zu erstrecken, und einen weiteren Haken (63a) umfasst, der einen weiteren Schlitz (63b) zur Aufnahme des Schnürbands definiert.

10. Schuh (1) nach einem der vorhergehenden Ansprüche, ferner umfassend eine mit der Membran (6) einstückig ausgebildete Manschette (7), die eine um eine Erstreckungsachse gewickelte rohrförmige Hülle (70) umfasst, sodass die Manschette (7) mindestens einen Teil eines Beins des Tiers umschließen kann.

11. Schuh (1) nach dem vorhergehenden Anspruch, wobei die Manschette (7) einen Einschnitt (71) umfasst, der an der Hülle (70) angeordnet ist, um bei Verwendung des Schuhs (1) an den hinteren Klauen des Tiers angeordnet zu sein und den hinteren Klauen zu ermöglichen, aus der Manschette (7) hervorzutreten.

12. Schuh (1) nach einem der Ansprüche 10 bis 11, wobei die Manschette (7) eine Kanüle (72) umfasst, die in die Manschette (7) eingesetzt ist, sodass sie bei Verwendung des Schuhs (1) zwischen der Hülle (70) und dem Huf angeordnet ist und an der Sohle (2) endet, um zu ermöglichen, dass Nährstoffe oder therapeutische Substanzen von außerhalb der Manschette (7) zum Huf strömen.

13. Schuh (1) nach einem der Ansprüche 10 bis 12, wobei die Manschette (7) Verschlussmittel (73) umfasst, die dazu ausgebildet sind, ein wahlweises Öffnen und Schließen mindestens eines Teils der Manschette (7) zu ermöglichen, sodass die Manschette (7) im geöffneten Zustand vorübergehend aufgeweitet werden kann, um das Einführen oder Entfernen des Hufs zu erleichtern.

14. Schuh (1) nach Anspruch 13, wobei die Verschlussmittel (73) einen oder mehrere Reißverschlüsse umfassen, die parallel zur Erstreckungsachse der Hülle (70) verlaufen.

15. Verfahren zum Beschlagen eines Hufs eines Klauentiers mit einem Schuh (1) nach einem der vorhergehenden Ansprüche, wobei der Huf eine erkrankte Klaue aufweist,
**dadurch gekennzeichnet, dass**
der zweite Abschnitt (21) im Bereich der erkrankten Klaue beschlagen wird.

## Revendications

1. Ferrure (1) pour un sabot d'animal ongulé à sabot fendu,
- ledit sabot d'animal ongulé à sabot fendu comprenant une paire d'onglons disposés réciproquement côte à côte,
- ladite ferrure (1) comprenant une semelle (2) s'étendant principalement selon un plan principal (2a), définissant un plan sagittal (2b) transversal audit plan principal (2a) et subdivisant ladite semelle (2) en une première portion (20) et une seconde portion (21), et configurée pour être positionnée entre le sol et lesdits onglons dudit sabot de telle sorte que ledit plan sagittal (2b) soit situé entre lesdits onglons,
- ladite première portion (20) comprenant un talon (3) faisant saillie à partir dudit plan principal (2a) transversalement audit plan principal (2a),
et ladite ferrure (1) étant **caractérisée en ce que**
- ladite première portion (20) est configurée pour permettre le support d'un seul desdits onglons, et
- ladite seconde portion (21) comprend au moins un logement (4) configuré pour recevoir au moins une partie dudit seul onglon de telle sorte que ledit onglon puisse faire saillie à partir dudit plan principal (2a) sans être obstrué, de manière à rester suspendu.

2. Ferrure (1) selon la revendication 1, dans laquelle ladite seconde portion (21) comprend deux desdits logements (4), respectivement disposés au niveau de la pointe dudit onglon et du talon dudit onglon, et mutuellement séparés par une bande (5) s'étendant transversalement audit plan sagittal (2b).

3. Ferrure (1) selon l'une quelconque des revendications précédentes, dans laquelle ledit logement (4) comprend au moins un trou (4a) traversant ladite semelle (2) au niveau dudit plan principal (2a).

4. Ferrure (1) selon l'une quelconque des revendications précédentes, dans laquelle ledit talon (3) s'étend sur toute la longueur de ladite première portion (20) et définit une épaisseur minimale, transversalement audit plan principal (2a), de 5 mm.

5. Ferrure (1) selon l'une quelconque des revendications précédentes, dans laquelle lesdites portions (20, 21) sont mutuellement symétriques par rapport audit plan sagittal (2b).

6. Ferrure (1) selon l'une quelconque des revendications précédentes, dans laquelle ladite semelle (2) définit, au niveau dudit plan principal (2a), des bords (22) entourant lesdites portions (20, 21), et ladite ferrure (1) comprend une membrane (6) s'étendant à partir desdits bords (22) transversalement audit plan principal (2a), sur un côté de ladite semelle (2) opposé audit talon (3), et configurée pour envelopper de manière stable lesdits onglons lorsque ladite ferrure (1) est utilisée sur ledit sabot.

7. Ferrure (1) selon la revendication 6,
dans laquelle ladite membrane (6) comprend une languette centrale (60) disposée au niveau dudit plan sagittal (2b), transversale audit plan sagittal (2b) et configurée pour être disposée entre lesdits onglons en s'étendant jusqu'à la couronne dudit sabot, et une paire de languettes latérales (61) disposées de manière symétrique par rapport audit plan sagittal (2b) et configurées pour être placées en contact avec la paroi latérale dudit sabot en s'étendant jusqu'à la couronne dudit sabot.

8. Ferrure (1) selon la revendication 7,
dans laquelle ladite languette centrale (60) comprend une broche (60a), chacune desdites languettes latérales (61) comprenant un crochet (61a) définissant une fente (61b), et ladite ferrure (1) comprend en outre un lacet entourant ledit sabot au niveau de la couronne dudit sabot, passant à travers lesdites fentes (61b) et comprenant des ouvertures au niveau de ses extrémités configurées pour être traversées par ladite broche (60a).

9. Ferrure (1) selon l'une quelconque des revendications 6 à 8,
dans laquelle ladite membrane (6) comprend en outre une paroi arrière (62) s'étendant entre lesdites languettes latérales (61) et configurée pour envelopper la partie arrière dudit sabot au-dessous du boulet dudit sabot et/ou une languette arrière (63) s'étendant entre lesdites languettes latérales (61), configurée pour s'étendre, lorsque ladite ferrure (1) est en utilisation, au moins jusqu'à la couronne dudit sabot, et comprenant en outre un crochet supplémentaire (63a) définissant une fente supplémentaire (63b) destinée à recevoir ledit lacet.

10. Ferrure (1) selon l'une quelconque des revendications précédentes, comprenant en outre un manchon (7) d'une seule pièce avec ladite membrane (6) et comprenant une enveloppe tubulaire (70) enroulée autour d'un axe de développement de manière à permettre audit manchon (7) d'entourer au moins une partie d'une patte dudit animal.

11. Ferrure (1) selon la revendication précédente, dans laquelle ledit manchon (7) comprend une fente (71) positionnée sur ladite enveloppe (70) de manière à être disposée, lorsque ladite ferrure (1) est en utilisation, au niveau des onglons postérieurs dudit animal afin de permettre auxdits onglons postérieurs de faire saillie à l'extérieur dudit manchon (7).

12. Ferrure (1) selon l'une quelconque des revendications 10 à 11, dans laquelle ledit manchon (7) comprend une canule (72) insérée à l'intérieur dudit manchon (7) de manière à être positionnée entre ladite enveloppe (70) et ledit sabot, lorsque ladite ferrure (1) est en utilisation, et se terminant au niveau de ladite semelle (2) de manière à permettre à des substances nutritives ou thérapeutiques de s'écouler vers ledit sabot depuis l'extérieur dudit manchon (7).

13. Ferrure (1) selon l'une quelconque des revendications 10 à 12, dans laquelle ledit manchon (7) comprend des moyens de fermeture (73) configurés pour permettre l'ouverture et la fermeture, sur commande, d'au moins une partie dudit manchon (7), de telle sorte que ledit manchon (7) puisse, lorsqu'il est ouvert, être temporairement dilaté afin de faciliter l'insertion ou le retrait dudit sabot.

14. Ferrure (1) selon la revendication 13,
dans laquelle lesdits moyens de fermeture (73) comprennent une ou plusieurs fermetures à glissière s'étendant parallèlement audit axe de développement de ladite enveloppe (70).

15. Procédé de ferrage d'une ferrure (1) selon l'une quelconque des revendications précédentes sur un sabot d'un animal ongulé à sabot fendu présentant un onglon malade,
**caractérisé par le fait que**
ladite seconde portion (21) est ferrée au niveau dudit onglon malade.
